# EUROPÄISCHE PATENTSCHRIFT

(11) **EP 0 703 249 B1**
(45) Veröffentlichungstag und Bekanntmachung des Hinweises auf die Patenterteilung: **01.04.1998**
(21) Anmeldenummer: 95114172.0
(22) Anmeldetag: 09.09.1995
(51) Int. Cl.: C08F 30/08

(54) **Oligomerisate und Polymerisate von Aminoalkenen**
Oligomers and polymers of amino-alcenes
Oligomères et polymères d'aminoalcènes

(30) Priorität: 20.09.1994 DE 4433481
(43) Veröffentlichungstag der Anmeldung: 27.03.1996
(73) Patentinhaber: BASF AKTIENGESELLSCHAFT, 67056 Ludwigshafen (DE)
(72) Erfinder: Fischer, David, Dr., D-67161 Gönnheim (DE); Langhauser, Franz, Dr., D-67098 Bad Dürkheim (DE); Kerth, Jürgen, Dr., D-67316 Carlsberg (DE); Schweier, Günther, Dr., D-67159 Friedelsheim (DE); Muelhaupt, Rolf, Prof.Dr., D-79117 Freiburg (DE); Schneider, Martin, D-79104 Freiburg (DE)

(56) Entgegenhaltungen:
- EP-A- 0 423 438
- DE-A- 1 594 386

## Beschreibung

Die vorliegende Erfindung betrifft Oligomerisate und Polymerisate, erhältlich durch polymerisation von
A) 0,001 bis 100 mol-% mindestens eines Aminoalkens der allgemeinen Formel I 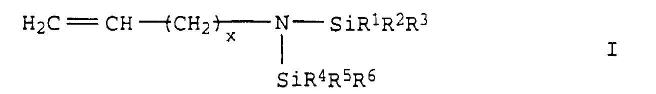 in der
   - X: für ganze Zahlen von 0 bis 25 steht und
   - R¹ bis R⁶: Wasserstoff, C₁- bis C₁₀-Alkyl, 5- bis 7-gliedriges Cycloalkyl, das seinerseits C₁- bis C₆-Alkylgruppen als Substituenten tragen kann oder C₆- bis C₁₅-Aryl bedeuten
   und
B) 0 bis 99,999 mol-% mindestens eines Alkens, in Gegenwart eines Katalysatorsystems wobei ein Katalysatorsystem, das als aktive Komponenten
C) einen Metallocenkomplex der allgemeinen Formel II 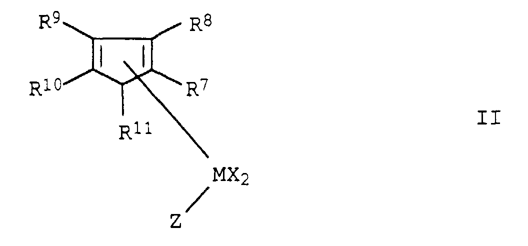 in der die Substituenten folgende Bedeutung haben:
   - M: Titan, Zirkonium, Hafnium, Vanadium, Niob oder Tantal,
   - X: Fluor, Chlor, Brom, Iod, Wasserstoff, C₁- bis C₁₀-Alkyl, C₆- bis C₁₅-Aryl oder -OR¹².
   - wobei R¹²: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
   - R⁷ bis R¹¹: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹³)₃ mit
   - R¹³: C₁- bis C₁₀-Alkyl, C₆- bis C₁₅-Aryl oder C₃- bis C₁₀-Cycloalkyl,
   - Z: für X oder 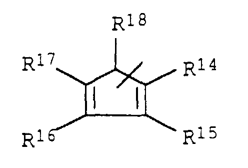 steht,
   wobei die Reste
   - R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
   - R₁₉: C₁- bis C₁₀-Alkyl, C₆- bis C₁₅-Aryl oder C₃- bis C₁₀-Cycloalkyl,
   oder wobei die Reste
   - R¹⁰ und Z: gemeinsam eine Gruppierung -[Y(R²⁰)₂]ₙ-E-bilden, in der
   - Y: für Silicium, Germanium, Zinn oder Kohlenstoff steht,
   - R²⁰: für Wasserstoff, C₁- bis C₁₀-Alkyl, C₃- bis C₁₀-Cycloalkyl oder C₆- bis C₁₅-Aryl
   - n: für die Zahlen 1, 2, 3 oder 4
   - E: für 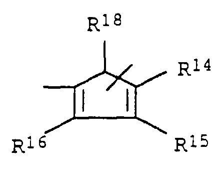 oder A steht, wobei A ―O―, ―S―, 〉NR²¹ oder 〉PR²¹ bedeutet,
   mit R²¹ C₁- bis C₁₀-Alkyl, C₆- bis C₁₅-Aryl, C₃- bis C₁₀-Cycloalkyl, Alkylaryl oder Si(R²²)₃
   mit R²² C₁- bis C₁₀-Alkyl, C₆- bis C₁₅-Aryl, C₃- bis C₁₀-Cycloalkyl oder Alkylaryl
   und
D) eine metalloceniumionenbildende Verbindung enthält,
   verwendet wird.

Weiterhin betrifft die vorliegende Erfindung Verfahren zur Herstellung derartiger Oligomerisate und Polymerisate sowie deren Verwendung zur Herstellung von weiteren stickstoffhaltigen Polymeren.

Bei vielen Anwendungen für Polyolefine bereitet deren geringe Polarität Schwierigkeiten. Dies gilt besonders dann, wenn eine gute Oberflächenhaftung erwünscht ist, z.B. beim Kleben oder bei der Lackierung von Werkstücken auf Polyolefinbasis. Ebenfalls kritisch ist die schlechte Phasenanbindung in Polyolefinblends mit polaren Polymeren, z.B. Polyamid. Zur Überwindung dieser Schwierigkeiten werden Polyolefinmaterialien vielfach polar modifiziert, d.h. polare Gruppen werden durch geeignete Oberflächenbehandlung (z.B. durch Beflammen) oder beispielsweise durch reaktive Extrusion (z.B. Pfropfung mit MSA) eingeführt. Diese chemisch an die Polyolefinmatrix gebundenen, polaren Gruppen verbessern die Wechselwirkung zu polaren Materialien und damit auch die Grenzflächenhaftung.

Den verschiedenen Ansätzen zur Herstellung polar modifizierter Polyolefinmaterialien ist gemein, daß ein aufwendiger Nachverarbeitungsschritt erforderlich ist. Außerdem ist die Verteilung der reaktiven Gruppen im nachbehandelten Polymer sehr inhomogen und kann verfahrensbedingt nur schlecht kontrolliert werden.

In der US-A 3,476,726 wird ein Copolymerisat eines 1-Olefins mit einem Dialkyl-ω-alkylenamin, das sich mit einem normalen, heterogenen Ziegler-Natta Katalysator herstellen läßt, beschrieben. Allerdings ist hier die Polarität der eingeführten Aminogruppe durch sterisch anspruchsvolle Alkylsubstituenten deutlich erniedrigt. Eine Abspaltung dieser Substituenten unter Ausbildung primärer Aminogruppen ist hier nicht möglich.

Die EP-A 423 438 beschreibt die Copolymerisation von Propen mit Allylbis (trimethylsilyl)amin bzw. Diallyltrimethylsilylamin. Diese wird ebenfalls mit einem konventionellen Ziegler-Natta Katalysator durchgeführt. Im Unterschied zu den in der US-A 3,476,726 beschriebenen Copolymeren werden die Trialkyklsilyl-Schutzgruppen leicht solvolytisch abgespalten, so daß Polyolefinmaterialien mit freien, primären Aminogruppen erhalten werden.

Nachteilig bei dem in der EP-A 423 438 beschriebenen Verfahren ist die Verwendung eines konventionellen heterogenen Ziegler-Natta Katalysators, da dieser nur eine bedingte Kontrolle der Molekulargewichtsverteilung und der Comonomerenverteilung erlaubt.

Die DE-A-1 594 386 beschreibt Terpolymere aus C₂-bis C₅-Alkenen und Aminosilylalkenen CH₂=CH-(CH₂)₂₋₈-SiR₃ die mit Vanadiumkatalysatoren herstellbar sind.

Aufgabe der vorliegenden Erfindung war es daher, Polymerisate mit funktionellen Gruppen zur Verfügung zu stellen, wobei die eingeführten funktionellen Gruppen möglichst gleichmäßig entlang der Polymerkette verteilt sein sollen. Weiterhin sollten die geschützten funktionellen Gruppen eine einfache Abspaltung der Schutzgruppen gestatten und die Molekulargewichtsverteilung der Polymerisate sollte eng sein.

Demgemäß wurden die eingangs definierten Oligomerisate und Polymerisate gefunden.

Weiterhin wurden Verfahren zur Herstellung derartiger Oligomerisate und Polymerisate sowie deren Verwendung zur Herstellung von weiteren stickstoffhaltigen Polymeren gefunden.

Zur Herstellung der erfindungsgemäßen Oligomerisate und Polymerisate werden als Komponente A) 0,001 bis 100 mol-%, vorzugsweise 1 bis 30 mol-% eines Aminoalkens der allgemeinen Formel I, in der x vorzugsweise für ganze Zahlen von 1 bis 18, insbesondere von 2 bis 15 steht und R¹ bis R⁶ vorzugsweise lineare oder verzweigte C₁- bis C₁₀-Alkylgruppen, insbesondere C₁- bis C₆-Alkylgruppen bedeuten. Bevorzugt sind Verbindungen der allgemeinen Formel I, in denen die beiden Silylreste -SiR¹R²R³ und -SiR⁴R⁵R⁶ gleich sind. Besonders bevorzugt ist es, wenn auch die Reste R¹, R² und R³ sowie R⁴, R⁵ und R⁶ die gleiche Bedeutung haben, insbesondere Methyl.

Es können auch verschiedene Aminoalkene als Komponente A) eingesetzt werden.

Die Herstellung der Aminoalkene der allgemeinen Formel I ist an sich bekannt. So kann man beispielsweise ausgehend von den käuflichen Verbindungen 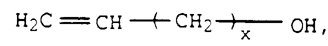 wie im Journal of Chem. Soc. 65 (1943), 1075-1080, beschrieben, die entsprechende Chlor-Verbindung 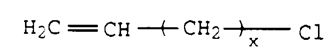 herstellen und diese wie in der Angewandten Chemie 80 (1968), 986-996 zu 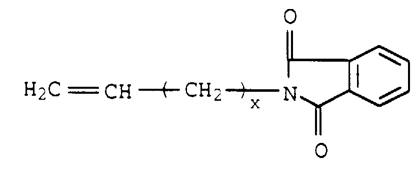 umsetzen.

Aus diesem Alkenylphthalimid läßt sich dann, wie in Synthesis 1976, 389-391, beschrieben, das Alkenylamin 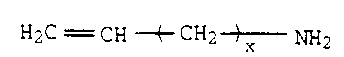 erhalten, welches dann wie in Tetrahedron Letters No. 11 (1968), 1325-1328, beschrieben, zum gewünschten Aminoalken der allgemeinen Formel I umgesetzt werden kann.

Als Komponente B) werden 0 bis 99,999 mol-%, vorzugsweise 70 bis 99 mol-% mindestens eines Alkens eingesetzt. Bevorzugt sind Alk-1-ene, insbesondere mit 2 bis 28 C-Atomen, vorzugsweise mit 2 bis 10 C-Atomen wie Ethylen, Propylen, Buten, Penten, Hexen, Hepten, Octen, Nonen und Decen. Es können aber auch Cycloolefine mit 4 bis 10 C-Atomen eingesetzt werden, beispielsweise Cyclobuten und Cyclopenten sowie bi- und polycyclische Olefine wie Norbornene.

Bei der Herstellung der erfindungsgemäßen Oligomerisate und Polymerisate hat es sich als bevorzugt erwiesen, wenn die Komponenten A) und B) in Gegenwart eines Metallocenkatalysatorsystems oligomerisiert bzw. polymerisiert werden.

Besonders geeignete Metallocenkomplexe C) lassen sich durch folgende allgemeine Formel II kennzeichnen: 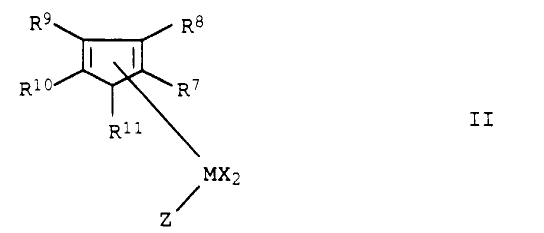 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR¹²,
- wobei R¹²: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R⁷ bis R¹¹: Wasserstoff, C₁- bis C₁₀-Alkyl, 5- bis 7-gliedriges Cycloalkyl, das seinerseits ein C₁- bis C₆-Alkyl als Substituent tragen kann, C₆- bis C₁₅-Aryl oder Arylalkyl, wobei gegebenenfalls auch zwei benachbarte Reste gemeinsam für 4 bis 15 C-Atome, bevorzugt 8 8bis 15 C-Atome, aufweisende cyclische Gruppen stehen können, oder Si(R¹³)₃ mit
- R¹³: C₁- bis C₁₀-Alkyl, C₆- bis C₁₅-Aryl oder C₃- bis C₁₀-Cycloalkyl,
- Z: für X oder 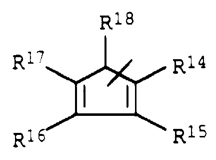 steht,
wobei die Reste
- R¹⁴ bis R¹⁸: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome, bevorzugt 8 bis 15 C-Atome, aufweisende cyclische Gruppen stehen können, oder Si(R¹⁹)₃ mit
- R¹⁹: C₁- bis C₁₀-Alkyl, C₆- bis C₁₅-Aryl oder C₃- bis C₁₀-Cycloalkyl,
oder wobei die Reste
- R¹⁰ und Z: gemeinsam eine Gruppierung -[Y(R²⁰)₂]ₙ-E- bilden, in der
- Y: für Silicium, Germanium, Zinn oder Kohlenstoff steht,
- R²⁰: für Wasserstoff, C₁- bis C₁₀-Alkyl, C₃- bis C₁₀-Cycloalkyl oder C₆- bis C₁₀-Aryl
- n: für die Zahlen 1, 2, 3 oder 4
- E: für 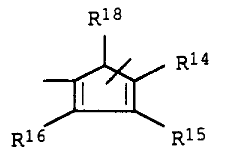 oder A steht, wobei A ―O―, ―S―, 〉NR²¹ oder 〉PR²¹ bedeutet,
- mit R²¹: C₁- bis C₁₀-Alkyl, C₆- bis C₁₅-Aryl, C₃- bis C₁₀-Cycloalkyl, Alkylaryl oder Si(R²²)₃
- mit R²²: C₁- bis C₁₀-Alkyl, C₆- bis C₁₅-Aryl, C₃- bis C₁₀-Cycloalkyl oder Alkylaryl.

Von den Metallocenkomplexen der allgemeinen Formel II sind 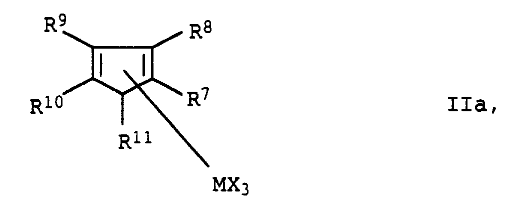 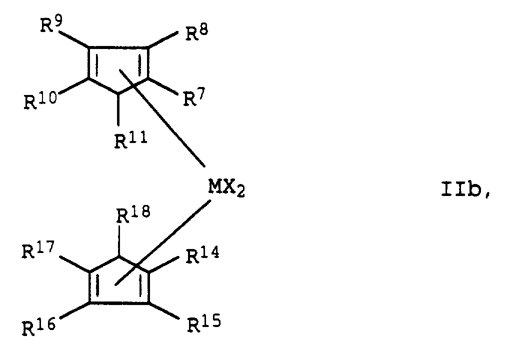 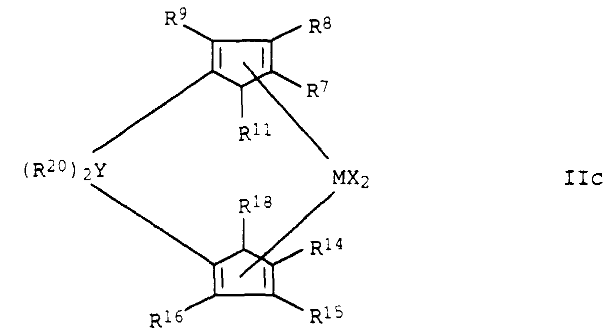 und 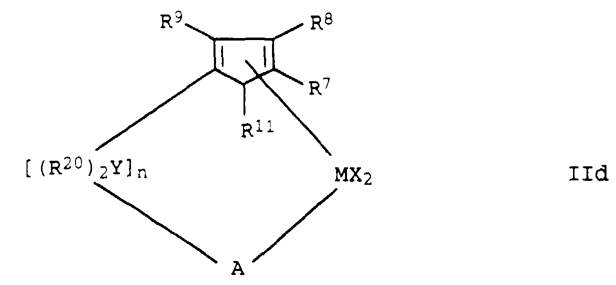 bevorzugt.
Unter der Bezeichnung Metallocene werden also nicht nur die Bis(η-cyclopentadienyl)-Metall-Komplexe verstanden.

Die Reste X können gleich oder verschieden sein, bevorzugt sind sie gleich.

Von den Verbindungen der Formel IIa sind insbesondere diejenigen bevorzugt, in denen
- M: Titan, Zirkonium oder Hafnium,
- X: Chlor und
- R⁷ bis R¹¹: Wasserstoff oder C₁- bis C₄-Alkyl bedeuten.

Von den Verbindungen der Formel IIb sind als bevorzugt diejenigen zu nennen, bei denen
- M: für Titan, Zirkonium oder Hafnium steht,
- X: für Chlor, C₁- bis C₄-Alkyl oder Phenyl,
- R⁷ bis R¹¹: Wasserstoff, C₁- bis C₄-Alkyl oder Si(R¹³)₃,
- R¹⁴ bis R¹⁸: Wasserstoff, C₁- bis C₄-Alkyl oder Si(R²⁰)₃ bedeuten.

Insbesondere sind die Verbindungen der Formel IIb geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis(cyclopentadienyl)-diphenylzirkonium, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel IIc sind diejenigen besonders geeignet, in denen
- R⁷ und R¹⁴: gleich sind und für Wasserstoff oder C₁- bis C₁₀-Alkylgruppen stehen,
- R¹⁴ und R¹⁸: gleich sind und für Wasserstoff, eine Methyl-, Ethyl-, iso-Propyl- oder tert.-Butylgruppe stehen
- R⁸, R⁹, R¹⁵ und R¹⁶: die Bedeutung
R⁹ und R¹⁶ C₁- bis C₄-Alkyl
R⁸ und R¹⁵ Wasserstoff haben oder zwei benachbarte Reste R⁸ und R⁹ sowie R¹⁵ und R¹⁶ gemeinsam für 4 bis 12 C-Atome aufweisende cyclische Gruppen stehen,
- R²⁰: für C₁- bis C₈-Alkyl,
- M: für Titan, Zirkonium oder Hafnium,
- Y: für Silicium, Germanium, Zinn oder Kohlenstoff und
- X: für Chlor oder C₁- bis C₄-Alkyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-3-tert.butyl-5-methylcyclopentadienyl)-dimethylzirkonium, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid und Dimethylsilandiylbis(-2-methylindenyl)-hafniumdichlorid.

Bei den Verbindungen der allgemeinen Formel IId sind als besonders geeignet diejenigen zu nennen, in denen
- M: für Titan oder Zirkonium,
- X: für Chlor oder C₁- bis C₁₀-Alkyl stehen,
- Y: für Silicium oder Kohlenstoff steht, wenn n = 1 ist oder für Kohlenstoff, wenn n = 2 ist
- R²⁰: für C₁- bis C₈-Alkyl, C₅- und C₆-Cycloalkyl oder C₆- bis C₁₀-Aryl,
- A: für ―O― , ―S― , 〉NR²¹
und
- R⁷ bis R⁹ und R¹¹: für Wasserstoff, C₁- bis C₁₀-Alkyl, C₃- bis C₁₀-Cycloalkyl, C₆- bis C₁₅-Aryl oder Si(R¹³)₃ stehen, oder wobei zwei benachbarte Reste für 4 bis 12 C-Atome aufweisende cyclische Gruppen stehen.

Besonders bevorzugt sind Metallocenkomplexe der allgemeinen Formel II, bei denen mindestens einer der Reste R⁷ bis R¹¹ von Wasserstoff verschieden ist. Vorzugsweise werden Verbindungen der Formel IIc eingesetzt, insbesondere Dimethylsilandiyl-bis(-2-methylindenyl)-zirkoniumdichlorid und Dimethylsilandiylbisindenylzirkoniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Metallocenkomplex kann auch µ-Oxo-bis-(chlorobiscyclopentadienyl)zirkonium verwendet werden.

Als Komponente D) können die Katalysatorsysteme noch offenkettige oder cyclische Alumoxanverbindungen enthalten.

Geeignet sind beispielsweise offenkettige oder cyclische Alumoxanverbindungen der allgemeinen Formel III oder IV 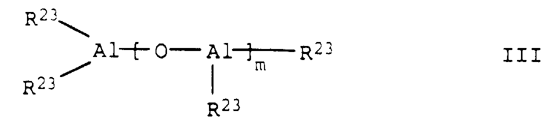 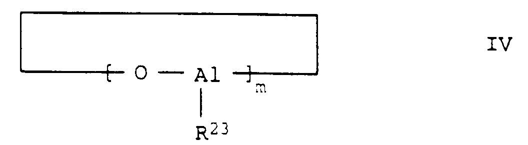
- wobei R²³: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Die Katalysatorkomplexe können auch in geträgerter Form eingesetzt werden.

Als Trägermaterialien werden vorzugsweise feinteilige Träger eingesetzt, die bevorzugt einen Teilchendurchmesser im Bereich von 1 bis 300 µm aufweisen, insbesondere von 30 bis 70 µm. Geeignete Trägermaterialien sind beispielsweise Kieselgele, bevorzugt solche der Formel SiO₂ · a Al₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Weitere Träger sind u.a. feinteilige Polyolefine, beispielsweise feinteiliges Polypropylen.

Die Herstellung der erfindungsgemäßen Oligomerisate und Polymerisate kann in den üblichen für die Oligo- bzw. Polymerisation von Alkenen verwendeten Reaktoren entweder diskontinuierlich oder bevorzugt kontinuierlich durchgeführt werden. Geeignete Reaktoren sind u.a. Rohrreaktoren, kontinuierlich betriebene Schleifenreaktoren oder Rührkessel, wobei man gegebenenfalls auch eine Reihe von mehreren hintereinander geschalteten Rührkesseln verwenden kann.

Die Oligo- bzw. Polymerisationsbedingungen sind an sich unkritisch. Drücke von 0,5 bis 3000 bar, bevorzugt 1 bis 100 bar, und Temperaturen von -50°C bis +300°C, bevorzugt 0 bis 150°C, haben sich als geeignet erwiesen.

Die Oligo- bzw. Polymerisationen lassen sich in der Gasphase, in einer Suspension, in flüssigen Monomeren und in inerten Lösungsmitteln durchführen. Als Suspensions- bzw. Lösungsmittel eignen sich Kohlenwasserstoffe, bevorzugt C₄- bis C₁₀-Alkane. Oligo- bzw. Polymerisate mit guten anwendungstechnischen Eigenschaften sind auch in der Gasphase, in einer Suspension und in flüssigen Monomeren erhältlich.

Die mittlere Molmasse der gebildeten Oligo- bzw. Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Durch Senkung der Reaktionstemperatur lassen sich Oligo- bzw. Polymerisate mit erhöhten mittleren Molmassen herstellen.

Bei der Aufarbeitung der Oligomerisate und Polymerisate, beispielsweise durch Ausfällen in salzsaurem Methanol erfolgt eine einfache Abspaltung der Schutzgruppen, so daß die Produkte primäre Aminogruppen aufweisen.

Die erfindungsgemäßen Oligomerisate und Polymerisate eignen sich insbesondere zur Herstellung von weiteren stickstoffhaltigen Polymeren. Der Anwendungsbereich ist sehr groß, so lassen sich beispielsweise Polyisocyanate, Polyurethane, Polyamide und Polyharnstoffe herstellen.

Die erfindungsgemäßen Oligomerisate und Polymerisate zeichnen sich durch gleichmäßigen Einbau der funktionellen Gruppen entlang der Polymerkette aus, bei den geschützten funktionellen Gruppen erfolgt eine einfache hydrolytische Abspaltung der Schutzgruppen bei der Aufarbeitung und die Molekulargewichtsverteilung der Oligomerisate und Polymerisate ist eng.

### Beispiele

### Beispiel 1: Polymerisat aus 1-Bis(trimethylsilyl)aminoundec-10-en und Propen

In einem Stahlautoklaven wurden 4,4 ml (≙ 11 mmol ≙ 27,9 mol-%) 1-Bis(trimethylsilyl)amino-undec-10-en in 80 ml abs. Toluol vorgelegt. Nach Zugabe von 20 ml 10 gew.-%iger toluolischer Methylalumoxan-Lösung (Fa. Witco) wurde Propen bis zu einem Gesamtdruck von 0,7 bar aufgepreßt (≙ 72,1 mol-% Propen, Löslichkeit von Propen bei 0,7 bar und 40°C: 0,2735 mol/l). Durch Zugabe einer Lösung von 2,32 mg (≙ 4 µmol) rac-Dimethylsilandiylbis(-2-methylbenzindenyl)-zirkoniumdichlorid in 4 ml Toluol wurde die Polymerisation gestartet. Die Temperatur wurde konstant bei 40°C gehalten. Nach 4 Stunden wurde die Polymerisation durch Entspannen des Autoklaven beendet. Das Produkt wurde in Methanol ausgefällt.

Die Aufarbeitung lieferte 13 g Copolymerisat mit einem mittleren Molekulargewicht Mₙ (Zahlenmittelwert) von 8446 g/mol (bestimmt durch Gelpermeationschromatographie), M_{w} : Mₙ von 2,56 und einem Schmelzpunkt von 137,6°C. ¹³C-NMR-Messungen ergaben einen Comonomergehalt (1-Bis(trimethylsilyl)amino-undec-10-en-Einbau) von 2,3 mol-%. Die NMR-Messungen zeigten keine Trialkylsilylgruppen mehr.

| | | | | |
|---|---|---|---|---|
| Elementaranalyse | gef. | 83,87 C | 14,3 H | 0,88 N |

### Beispiel 2: Polymerisat aus 1-Bis(trimethylsilyl)amino-undec-10-en und Oct-1-en

In einem Stahlautoklaven wurden 5 ml (≙ 13 mmol ≙ 26,5 mol-%) 1-Bis(trimethylsilyl)amino-undec-10-en in 80 ml abs. Toluol vorgelegt. Nach Zugabe von 10 ml 10 gew.-%iger toluolischer Methylalumoxan-Lösung (Fa. Witco) wurden 5 ml (≙ 0,036 mol) Oct-1-en zugegeben (≙ 73,5 mol-% Oct-1-en). Durch Zugabe einer Lösung von 4,15 mg (≙ 9,2 µmol) Dimethylsilandiylbisindenylzirkoniumdichlorid in 4 ml Toluol wurde die Reaktion gestartet. Die Temperatur wurde konstant bei 40°C gehalten. Nach 4 Stunden wurde die Polymerisation beendet.

Die Aufarbeitung lieferte 1,4 g Copolymerisat mit einem mittleren Molekulargewicht Mₙ (Zahlenmittelwert) von 1160 g/mol (bestimmt durch ¹H-NMR-Spektroskopie). ¹H-NMR-Messungen ergaben einen Comonomergehalt (1-Bis(trimethylsilyl)amino-undec-10-en-Einbau) von 21 mol-%. Die NMR-Messungen zeigten keine Trialkylsilylgruppen mehr.

| | | | | |
|---|---|---|---|---|
| Elementaranalyse | gef. | 78,17 C | 13,25 H | 2,37 N |

### Beispiele 3 und 4: Herstellung von Polyharnstoffen

1000 mg (≙ 0,63 mmol Aminogruppen) des in Beispiel 1 erhaltenen, primäre Aminogruppen tragenden Copolymerisats wurden in 20 ml Toluol gelöst und mit 62,3 mg (≙ 0,63 mmol) n-Butylisocyanat (Beispiel 3) bzw. mit 74,8 mg (≙ 0,63 mmol) Phenylisocyanat (Beispiel 4) bei 100°C 60 Minuten umgesetzt. Es wurde in Methanol ausgefällt und 60 Minuten im Vakuum getrocknet.

### Beispiel 3

| | | | | |
|---|---|---|---|---|
| Elementaranalyse | ber. | 82,50 C | 14,0 H | 1,66 N |
| | gef. | 82,96 C | 14,1 H | 1,59 N |

Schmelzpunkt: 142,5°C

### Beispiel 4

| | | | | |
|---|---|---|---|---|
| Elementaranalyse | ber. | 82,94 C | 13,76 H | 1,64 N |
| | gef. | 83,63 C | 13,74 H | 1,56 N |

Schmelzpunkt: 143,9°C

Die Elementaranalysen zeigen die praktisch quantitative Umsetzung der Komponenten.

## Patentansprüche

1. Oligomerisate und Polymerisate, erhältlich durch polymerisation von
A) 0,001 bis 100 mol-% mindestens eines Aminoalkens der allgemeinen Formel I 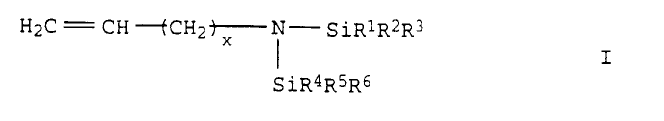 in der
X für ganze Zahlen von 0 bis 25 steht und
R¹ bis R⁶ Wasserstoff, C₁- bis C₁₀-Alkyl, 5- bis 7-gliedriges Cycloalkyl, das seinerseits C₁- bis C₆-Alkylgruppen als Substituenten tragen kann oder C₆- bis C₁₅-Aryl bedeuten
und
B) 0 bis 99,999 mol-% mindestens eines Alkens, in Gegenwart eines Katalysatorsystems wobei ein Katalysatorsystem, das als aktive Komponenten
C) einen Metallocenkomplex der allgemeinen Formel II 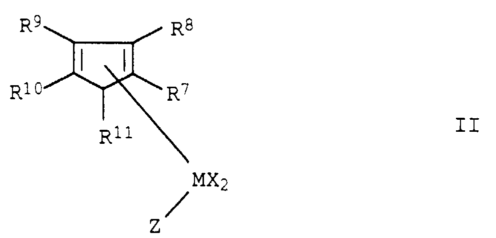 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR¹²,
wobei R¹² C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R⁷ bis R¹¹ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹³)₃ mit
R¹³ C₁- bis C₁₀-Alkyl, C₆- bis C₁₅-Aryl oder C₃- bis C₁₀-Cycloalkyl,
Z für X oder 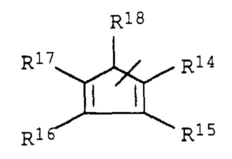 steht,
wobei die Reste
R¹⁴ bis R¹⁸ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹⁹)₃ mit
R¹⁹ C₁- bis C₁₀-Alkyl, C₆- bis C₁₅-Aryl oder C₃- bis C₁₀-Cycloalkyl,
oder wobei die Reste
R¹⁰ und Z gemeinsam eine Gruppierung -[Y(R²⁰)₂]ₙ-E-bilden, in der
Y für Silicium, Germanium, Zinn oder Kohlenstoff steht,
R²⁰ für Wasserstoff, C₁- bis C₁₀-Alkyl, C₃- bis C₁₀-Cycloalkyl oder C₆- bis C₁₅-Aryl
n für die Zahlen 1, 2, 3 oder 4
E für 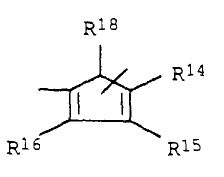 oder A steht, wobei A ―O―, ―S―, 〉NR²¹ oder 〉PR²¹ bedeutet,
mit R²¹ C₁- bis C₁₀-Alkyl, C₆- bis C₁₅-Aryl, C₃- bis C₁₀-Cycloalkyl, Alkylaryl oder Si(R²²)₃
mit R²² C₁- bis C₁₀-Alkyl, C₆- bis C₁₅-Aryl, C₃- bis C₁₀-Cycloalkyl oder Alkylaryl
und
D) eine metalloceniumionenbildende Verbindung enthält,
verwendet wird.

2. Oligomerisate und Polymerisate nach Anspruch 1, dadurch gekennzeichnet, daß als Komponente D) offenkettige oder cyclische Alumoxanverbindungen der allgemeinen Formel III oder IV 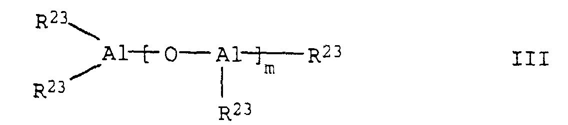 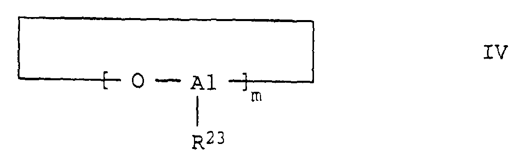
wobei R²³ eine C₁- bis C₄-Alkylgruppe bedeutet und m für eine ganze Zahl von 5 bis 30 steht,
eingesetzt werden.

3. Oligomerisate und Polymerisate nach den Ansprüchen 1 bis 2, dadurch gekennzeichnet, daß als Komponente B) Alk-1-ene eingesetzt werden.

4. Oligomerisate und Polymerisate nach den Ansprüchen 1 bis 3, dadurch gekennzeichnet, daß sie kristallin sind.

5. Verfahren zur Herstellung von Oligomerisaten und Polymerisaten gemäß den Ansprüchen 1 bis 4, dadurch gekennzeichnet, daß die Komponenten A) und B) bei Drücken von 0,5 bis 3000 bar und Temperaturen von -50 bis +300°C in Gegenwart eines Katalysatorsystems, das als aktive Komponenten Metallocenkomplexe der allgemeinen Formel II und gegebenenfalls offenkettige oder cyclische Alumoxanverbindungen der allgemeinen Formel III oder IV enthält, oligomerisiert oder polymerisiert werden.

6. Verwendung von Oligomerisaten oder Polymerisaten gemäß der Ansprüche 1 bis 4 zur Herstellung von stickstoffhaltigen Polymeren.

## Claims

1. An oligomer or polymer, obtainable by polymerizing
A) from 0.001 to 100 mol% of at least one aminoalkene of the general formula I 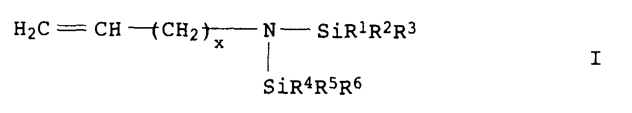 where
X is an integer from 0 to 25 and
R¹ to R⁶ are hydrogen, C₁- to C₁₀-alkyl, 5- to 7-membered cycloalkyl which, in turn, can carry C₁- to C₆-alkyl groups as substituents or C₆- to C₁₅-aryl
and
B) from 0 to 99.999 mol% of at least one alkene, in the presence of a catalyst system, where a catalyst system is used which contains as active components
C) a metallocene complex of the general formula II 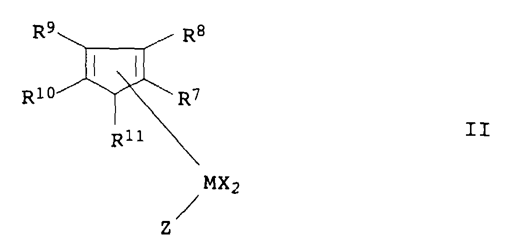 where the substituents have the following meanings:
M is titanium, zirconium, hafnium, vanadium, niobium or tantalum,
X is fluorine, chlorine, bromine, iodine, hydrogen, C₁- to C₁₀-alkyl, C₆- to C₁₅-aryl or -OR¹²,
R¹² being C₁- to C₁₀-alkyl, C₆- to C₁₅-aryl, alkylaryl, arylalkyl, fluoroalkyl or fluoroaryl each having 1 to 10 C atoms in the alkyl radical and 6 to 20 C atoms in the aryl radical,
R⁷ to R¹¹ are hydrogen, C₁- to C₁₀-alkyl, 5- to 7-membered cycloalkyl which, in turn, can carry a C₁- to C₁₀-alkyl as a substituent, C₆-to C₁₅-aryl or arylalkyl, it also being possible, if desired, for two adjacent radicals together also to be a cyclic group containing 4 to 15 C atoms, or Si(R¹³)₃ where
R¹³ is C₁- to C₁₀-alkyl, C₆- to C₁₅-aryl or C₃- to C₁₀-cycloalkyl,
Z is X or 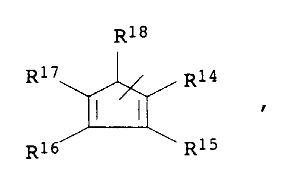
the radicals
R¹⁴ to R¹⁸ being hydrogen, C₁- to C₁₀-alkyl, 5- to 7-membered cycloalkyl which, in turn, can carry a C₁- to C₁₀-alkyl as a substituent, C₆-to C₁₅-aryl or arylalkyl and it being possible, if desired, for two adjacent radicals together also to be a cyclic group containing 4 to 15 C atoms, or Si(R¹⁹)₃ where
R¹⁹ is C₁- to C₁₀-alkyl, C₆- to C₁₅-aryl or C₃- to C₁₀-cycloalkyl,
or the radicals
R¹⁰ and Z together being a group -[Y(R²⁰)₂]ₙ-E-, where
Y is silicon, germanium, tin or carbon,
R²⁰ is hydrogen, C₁- to C₁₀-alkyl, C₃- to C₁₀-cycloalkyl or C₆- to C₁₅-aryl
n is a number 1, 2, 3 or 4
E is 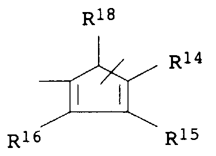 or A, A being ―O―, ―S―, 〉NR²¹ oder 〉PR²¹,
where R²¹ is C₁- to C₁₀-alkyl, C₆- to C₁₅-aryl, C₃- to C₁₀-cycloalkyl, alkylaryl or Si(R²²)₃
where R²² is C₁- to C₁₀-alkyl, C₆- to C₁₅-aryl, C₃- to C₁₀-cycloalkyl or alkylaryl
and
D) a metallocene ion-forming compound.

2. An oligomer or polymer as claimed in claim 1, wherein the component D) employed is an open-chain or cyclic alumoxane compound of the general formula III or IV 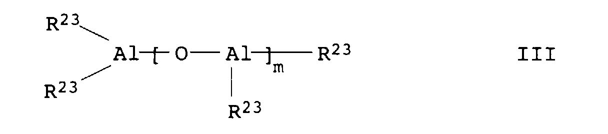 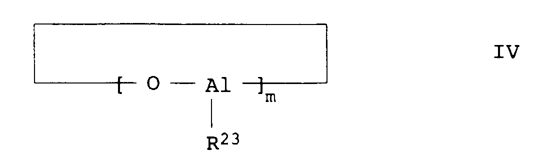
R²³ being a C₁- to C₄-alkyl group and m being an integer from 5 to 30.

3. An oligomer or polymer as claimed in claim 1 or 2, wherein the component B) employed is an alk-1-ene.

4. An oligomer or polymer as claimed in claims 1 to 3, which is crystalline.

5. A process for preparing oligomers and polymers as claimed in claims 1 to 4, which comprises oligomerizing or polymerizing the components A) and B) at from 0.5 to 3000 bar and from -50 to +300°C in the presence of a catalyst system which as active components contains metallocene complexes of the general formula II and, if desired, open-chain or cyclic alumoxane compounds of the general formula III or IV.

6. The use of oligomers or polymers as claimed in claims 1 to 4 for preparing nitrogen-containing polymers.

## Revendications

1. Oligomères et polymères, que l'on peut obtenir par la copolymérisation de
A) 0,001 à 100% molaires d'au moins un aminoalcène de la formule générale I : 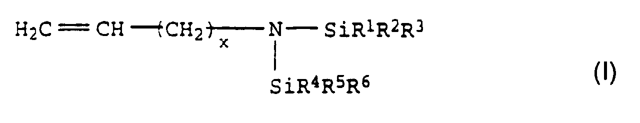 dans laquelle
x représente un nombre entier de 0 à 25, et
R¹ à R⁶ représentent chacun un atome d'hydrogène, un radical alkyle en C₁ à C₁₀, un radical cycloalkyle pentagonal à heptagonal, qui peut, à son tour, porter des radicaux alkyle en C₁ à C₆ à titre de substituants, ou un radical aryle en C₆ à C₁₅
et
B) 0 à 99,999% molaires d'au moins un alcène,
en présence d'un système catalytique, où on utilise un système catalytique qui contient, à titre de composants actifs,
C) une complexe d'un métallocène de la formule générale II : 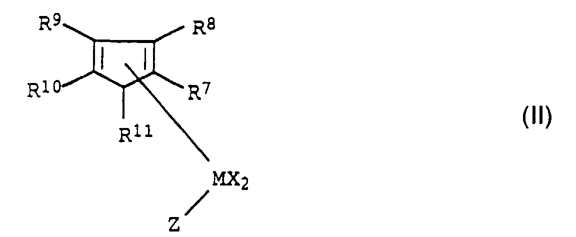 dans laquelle les divers substituants ont les significations suivantes :
M titre, zirconium, hafnium, vanadium, niobium ou tantale,
X fluor, chlore, brome, iode, hydrogène, alkyle en C₁ à C₁₀, aryle en C₆ à C₁₅ ou -OR¹²,
où R¹² représente un groupe alkyle en C₁ à C₁₀, aryle en C₆ à C₁₅, alkylaryle, arylalkyle, fluoralkyle ou fluoraryle avec, à chaque fois, de 1 à 10 atomes de carbone dans le reste alkyle et de 6 à 20 atomes de carbone dans le reste aryle,
R⁷ à R¹¹ hydrogène, alkyle en C₁ à C₁₀, cycloalkyle pentagonal à heptagonal, qui peut, à son tour, porter un radical alkyle en C₁ à C₁₀ à titre de substituant, aryle en C₆ à C₁₅ ou arylalkyle, où éventuellement aussi deux restes voisins peuvent former en commun des radicaux cycliques présentant de 4 à 15 atomes de carbone, ou Si(R¹³)₃,
avec
R¹³ alkyle en C₁ à C₁₀, aryle en C₆ à C₁₅ ou cycloalkyle en C₃ à C₁₀,
Z représente X ou 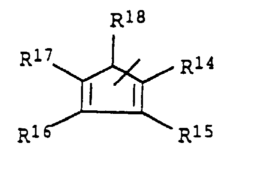
où les restes
R¹⁴ à R¹⁸ représentent chacun un atome d'hydrogène, un radical alkyle en C₁ à C₁₀, cycloalkyle pentagonal à heptagonal, qui peut, à sont tour, porter un radical alkyle en C₁ à C₁₀ à titre de substituant, aryle en C₆ à C₁₅ ou arylalkyle et où éventuellement aussi deux restes voisins peuvent représenter en commun des groupes cycliques présentant de 4 à 15 atomes de carbone, ou Si(R¹⁹)₃ avec
R¹⁹ alkyle en C₁ à C₁₀, aryle en C₆ à C₁₅ ou cycloalkyle en C₃ à C₁₀,
ou bien où les restes
R¹⁰ et Z forment en commun un groupement -[Y(R²⁰)₂]ₙ-E-dans lequel
Y représente le silicium, le germanium, l'étain ou le carbone,
R²⁰ représente un atome d'hydrogène, un radical alkyle en C₁ à C₁₀, cycloalkyle en C₃ à C₁₀ ou aryle en C₆ à C₁₅,
n représente les nombres 1, 2, 3 ou 4,
E représente 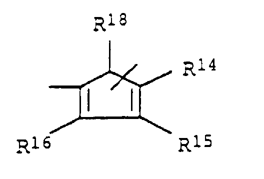 ou A, où A ―O―, ―S―, >NR²¹ ou >PR²¹
avec R²¹ alkyle en C₁ à C₁₀, aryle en C₆ à C₁₅, cycloalkyle en C₃ à C₁₀, alkylaryle ou Si(R²²)₃,
avec R²² alkyle en C₁ à C₁₀, aryle en C₆ à C₁₅, cycloalkyle en C₃ à C₁₀ ou alkylaryle,
et
D) un composé formant des ions métallocénium.

2. Oligomères et polymères suivant la revendication 1, caractérisés en ce que l'on utilise, à titre de composant D), des composés d'alumoxanne à chaîne ouverte ou cycliques des formules III ou IV : 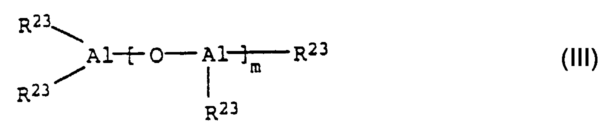 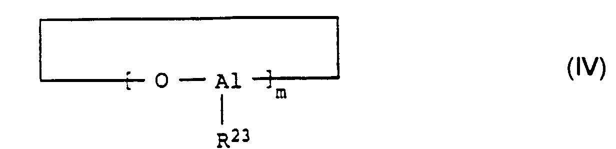 dans lesquelles R²³ représente un radical alkyle en C₁ à C₄ et m représente un nombre entier dont la valeur varie de 5 à 30.

3. Oligomères et polymères suivant l'une quelconque des revendications 1 et 2, caractérisés en ce que l'on utilise des alc-1-ènes à titre de composant B).

4. Oligomères et polymères suivant l'une quelconque des revendications 1 à 3, caractérisés en ce qu'ils sont cristallins.

5. Procédé de préparation d'oligomères et de polymères suivant l'une quelconque des revendications 1 à 4, caractérisé en ce que l'on oligomérise ou polymérise les composants A) et B) sous des pressions de 0,5 à 3000 bars et à des températures de -50 à +300°C en présence d'un système catalytique qui contient, à titre de composants actifs, des complexes de métallocènes de la formule générale II et éventuellement des composés d'alumoxanne à chaîne ouverte ou cycliques des formules générales III ou IV.

6. Utilisation d'oligomères ou de polymères suivant l'une quelconque des revendications 1 à 4, pour la fabrication de polymères contenant de l'azote.
